# EUROPÄISCHE PATENTSCHRIFT

(11) **EP 2 491 369 B1**
(45) Veröffentlichungstag und Bekanntmachung des Hinweises auf die Patenterteilung: **15.07.2015**
(21) Anmeldenummer: 10760637.8
(22) Anmeldetag: 13.09.2010
(51) Int. Cl.: G01N 21/47, G01N 21/72, G01N 21/76

(54) **SCHNELLE OPTISCHE TOMOGRAPHIE**
FAST OPTICAL TOMOGRAPHY
TOMOGRAPHIE OPTIQUE RAPIDE

(30) Priorität: 21.10.2009 DE 102009044303
(43) Veröffentlichungstag der Anmeldung: 29.08.2012
(73) Patentinhaber: Karlsruher Institut für Technologie, 76131 Karlsruhe (DE)
(72) Erfinder: SUNTZ, Rainer, 76327 Pfinztal (DE); ANIKIN, Nikolay, 456771 Snezhinsk (RU); BOCKHORN, Henning, 76327 Pfinztal (DE)
(74) Vertreter: Fitzner, Uwe
(86) Internationale Anmeldenummer: PCT/EP2010/063390
(87) Internationale Veröffentlichungsnummer: WO 2011/067003

(56) Entgegenhaltungen:
- WO-A1-99/20997
- DE-A1- 19 821 956
- US-A1- 2004 015 062
- US-A1- 2006 072 109
- US-H- H1 925
- FUMITERU AKAMATSU ET AL: "The development of a light-collecting probe with high spatial resolution applicable to randomly fluctuating combustion fields" MEASUREMENT SCIENCE AND TECHNOLOGY, IOP, BRISTOL, GB, Bd. 10, Nr. 12, 1. Dezember 1999 (1999-12-01), Seiten 1240-1246, XP020064880 ISSN: 0957-0233 DOI: DOI:10.1088/0957-0233/10/12/316
- BENNETT K E ET AL: "EXPERIMENTAL OPTICAL FAN BEAM TOMOGRAPHY" APPLIED OPTICS, OPTICAL SOCIETY OF AMERICA, US, Bd. 23, Nr. 16, 15. August 1984 (1984-08-15), Seiten 2678-2685, XP002051190 ISSN: 0003-6935 DOI: DOI:10.1364/AO.23.002678

## Beschreibung

Die vorliegende Erfindung betrifft eine Tomographievorrichtung/-Vorrichtung, ein schnelles optisches Tomographieverfahren und Verwendung der Vorrichtung und des Verfahrens.

### Stand der Technik:

In modernen verbrennungstechnischen Anlagen, wie z.B. Gasturbinenbrennkammern, treten insbesondere unter mageren Bedingungen instabile Betriebszustände auf. Diese sind durch zeitlich periodische Fluktuationen der gesamten volumetrischen Wärmefreisetzungsrate gekennzeichnet und bewirken erhebliche Druckschwankungen in der Brennkammer. Letztere führen zu einer inakzeptablen Lärmbelästigung im örtlichen Umfeld der Anlage sowie zu mechanischen Belastungen der einzelnen Bauelemente. Die Vermeidung instabiler Betriebsbedingungen, die durch die thermische Leistung und die Luftzahl eindeutig und reproduzierbar festgelegt sind, ist hinsichtlich der Lärm- und NOₓ-Emissionen aus Gasturbinenbrennkammern ein wichtiges technologisches Ziel.

Viele Ansätze zur Vorhersage von instabilen Betriebspunkten verwenden die Wärmefreisetzungsrate, so dass der Kenntnis der Wärmefreisetzungsrate zentrale Bedeutung zukommt. Die Wärmefreisetzungsrate ist nicht ohne weiteres experimentell zugänglich. Das Flammeneigenleuchten hingegen ist messtechnisch vergleichsweise einfach zugänglich. Es wird von Molekülen verursacht, die sich fernab des thermodynamischen Gleichgewichtes in einem elektronisch angeregten Zustand befinden. Innerhalb der Lebensdauer des angeregten Zustandes gehen diese Moleküle durch Photonenemission in den elektronischen Grundzustand über. Das Flammeneigenleuchten entsteht daher zwangsläufig nur in unmittelbarer Umgebung der Reaktionszone der Flamme und ist aufgrund dessen zumindest qualitativ mit der Wärmefreisetzungsrate der Flamme verbunden. Das tomographisch aufgelöste Flammeneigenleuchten einer einzelnen Spezies wie bspw. OH* kann somit dazu verwendet werden, online Informationen über die Wärmefreisetzung zu erhalten und damit instabile Betriebsweise durch Regelungseingriffe bei der Brennstoffzufuhr zu vermeiden.

Im bisherigen Stand der Technik werden verschiedene Systeme zur tomographischen Entfaltung von Flammen eingesetzt. Zur Untersuchung laminarer, stationärer Flammen kommt dabei das klassische Verfahren zum Einsatz, bei dem eine einzelne Kamera um das zu untersuchende Objekt rotiert und bei einer Vielzahl von Winkeln einzelne, zeitlich nacheinander erfasste Aufnahmen zur tomographischen Rekonstruktion nutzt, wie z.B. in H. M. Hertz, Opt. Commun. 54, 131 (1985), G. W. Faris and R. L. Byer, Opt. Lett. 12, 155 (1987), P. J. Emmerman, R. Goulard, R. J. Santoro, and H. G. Semerjian, J. Energy 4, 70 (1980), H. Uchiyama, M. Nakajima, and S. Yuta, Appl. Opt. 24, 4111 (1985). Diese "klassischen" Tomographie-Verfahren sind jedoch für die Untersuchung turbulenter Flammen bedingt durch die dort auftretenden schnellen räumlichen Fluktuationen völlig ungeeignet, da ein einzelner Detektor auch nicht annähernd mit adäquater Geschwindigkeit um das zu untersuchende Objekt rotiert werden kann. Die einzig denkbare Alternative zur Detektion in solchen Systemen besteht demzufolge darin, sich im Vorfeld der eigentlichen Messung auf eine - entsprechend dem gewünschten räumlichen Auflösungsvermögen - gewisse Anzahl von Detektionswinkeln und gegebenenfalls Anzahl von Teilstrahlen/Detektionswinkel festzulegen. I. Ihrke und M. Magnor, Eurographics/ACM SIGGRAPH Symposium on Computer Animation, Edts. R. Boulic, D.K. Pai (2004) zeichneten hierzu eine Multi Video Sequenz mit 8 Kameras mit 640 x 480 Pixeln und 15 Bilder pro Sekunde auf. Die Kameras wurden dabei kreisförmig um das Untersuchungsobjekt gestellt. Obwohl der apparative Aufwand durch die Verwendung von 8 nichtintensivierten Kameras vergleichsweise hoch ist, wird aufgrund der mangelnden Empfindlichkeit der Kameras das gesamte - nicht speziesselektive und damit im Hinblick auf die Untersuchung der Wärmefreisetzung wenig relevante - Flammeneigenleuchten detektiert. H. M. Hertz and G. W. Faris: "Emission tomography of flame radicals", Optic Letters, 13, 5, 351 (1988) führten u.a. Untersuchungen in einer Propan-Luft Bunsenbrennerflamme durch. Durch Verwendung zweier Spiegel, die um die Flamme unter verschiedenen Winkeln aufgestellt wurden, konnte neben der direkten (ohne Spiegel) Projektion simultan zwei weitere durch Reflektion der CH-Chemilumineszenz bei einer Belichtungszeit von 16 Millisekunden mittels eines intensivierten Dioden-Arrays ermittelt werden. Der Aufbau könnte laut Aussage der Autoren auf sechs Projektionen erweitert werden, indem zwei weitere Spiegel und ein weiteres Dioden-Array zum Einsatz kommen würde. Neben der starken Limitierung auf lediglich 6 maximal mögliche Projektionen und der damit verbundenen deutlich schlechteren räumlichen Auflösung erfordert die Methode zwei Detektoren. Darüber hinaus ist sie durch die Verwendung von Spiegeln für die Signalerfassung der verschiedenen Projektionen sehr unflexibel im Hinblick auf die Adaption der Messtechnik auf unterschiedliche Untersuchungsobjekte. Y. Ishino and N. Ohiwa: "Three-Dimensional Computerized Tomographic Reconstruction of Instantaneous Distribution of Chemiluminescence of a Turbulent Premixed Flame", JSME, Series B, 48, 1, 34 (2005) detektieren breitbandig die Chemilumineszenz-Signale (400 - 600 nm), die aus einer fetten, turbulenten Propan-Luft-Vormischflamme emittiert werden. Dabei verwenden sie eine speziell angefertigte Multi-Linsen-Kamera in Verbindung mit High-Speed Schwarz-Weiß-Film. In Ihrer 40-Nachweiswinkel-Anordnung erzielen sie zwar eine gute räumliche Auflösung (0,12 mm), aber auf Kosten der Empfindlichkeit und einer - aufgrund der äußerst zeitraubenden Auswertung durch Verwendung des photographischen Films - geringen Wiederholrate. Sie erzielen dabei eine Belichtungszeit von mäßigen 1,2 Millisekunden lediglich dadurch, dass sie neben der im Vergleich zu OH* wesentlich intensiveren C₂- Chemilumineszenz auch Rußleuchten detektieren. Genanntes Signal ist aber im Hinblick auf die Untersuchung des Ortes, an dem die Wärmefreisetzung der Flamme stattfindet, wenig aussagekräftig.

Stand der Technik sind auch verschiedene weitere Geräte. Eines davon ist das High Speed PMT-UV-CAM von der Firma Smetec. Bei diesem Gerät werden eine Vielzahl von Photomultipliern mit entsprechenden HV-Spannungsversorgungen zur Signaldetektion, d.h. zur messtechnischen Erfassung der Radon-Transformierten anstelle einer einzelnen intensivierten CCD-Kamera verwendet. Dieses Gerät ist speziell für innermotorische Anwendungen designt. Ein weiteres Gerät des Standes der Technik ist das AVL Visio Tomo von der Firma AVL. Bei dem Gerät von AVL werden lediglich 160 optische Kanäle zur tomographischen Rekonstruktion verwendet. Die eigentliche Signaldetektion erfolgt mit Photodioden. Auch dieses Gerät ist speziell für innermotorische Anwendungen vorgesehen und in seiner Empfindlichkeit begrenzt.

### Aufgabe:

Aufgabe der vorliegenden Erfindung ist es, die Systeme und Verfahren des Standes der Technik zu verbessern und deren Nachteile zu vermeiden.
Es sollten im Rahmen der vorliegende Erfindung demgemäß eine Vorrichtung/ Vorrichtung sowie ein Verfahren gefunden werden, die im Hinblick auf den Stand der Technik eine erhöhte Empfindlichkeit des Detektorsystems aufweisen, sehr geringe apparative Kosten verursachen und den Nachweis sehr geringer Spezieskonzentrationen, insbesondere im ppb-Bereich bei lumineszierenden Spezies, sehr kurze Belichtungszeiten und schnelle Bildfolgen und damit Online-Messungen ermöglichen.

Ferner sollten Verwendungsmöglichkeiten für die Aufgabe lösenden Vorrichtungen und Verfahren gefunden werden.

Weitere Aufgaben ergeben sich aus der Beschreibung und den exemplarischen Ausgestaltungen sowie den Figuren.

### Lösung:

Diese Aufgabe wird durch die weiter unten beschriebene Vorrichtung, die ebenfalls weiter unten beschriebenen Verfahren und die unten beschriebenen Verwendungen, sowie die in den Ansprüchen dargestellten Gegenstände gelöst.

### Begriffsdefinitionen:

Im Rahmen der vorliegenden Erfindung bedeutet der Begriff "Raumtemperatur" eine Temperatur von 20°C. Temperaturangaben sind, soweit nicht anders angegeben, in Grad Celsius (°C).

Der Term "ppb" bedeutet "parts per billion", also Teile pro Milliarde.

In der Beschreibung und in den Zeichnungen der vorliegenden Erfindung sind gleiche Teile beziehungsweise Merkmale in Beschreibung, Ansprüchen und den Zeichnungen durch gleiche Ziffern bezeichnet.

Der Begriff "i-Kamera" oder "intensivierte Kamera" bedeutet im Rahmen der vorliegenden Erfindung eine Kamera, die einen vorgeschalteten Bildverstärker umfasst.

Im Rahmen der vorliegende Erfindung werden die Begriffe "Objekt", "Spezies" und "Probe" synonym für die zu untersuchende Spezies oder Proben, die zumindest eine optisch erfassbare Eigenschaft aufweisen verwendet.

Im Rahmen der vorliegende Erfindung bedeutet die Notation mit einem Stern neben einer Spezies, wie z.B. "CH** oder "OH*" einen elektronisch angeregten Zustand der Spezies.

### Detaillierte Beschreibung:

Erster Gegenstand der vorliegende Erfindung ist eine Vorrichtung zur Erfassung und Verarbeitung der optisch erfassbaren Eigenschaften, mit einer kreisförmigen Konstruktion umfassend, eine einzige optische zweidimensionale Detektoreinheit in Form einer Kamera,
mindestens drei um den Mittelpunkt der Vorrichtung angeordnete optische Erfassungseinheiten, die von einem zu untersuchenden Objekt ausgehendes Licht erfassen, wobei
die von den Erfassungseinheiten erfassten Lichtsignale auf die einzige optische zweidimensionale Detektoreinheit geführt werden, und wobei im Mittelpunkt der Vorrichtung das zu untersuchende Licht-emittierende Objekt angeordnet wird, dadurch gekennzeichnet, dass auf einem ersten Halbkreis
- eine Mehrzahl halbkreisförmig um den Kreismittelpunkt angeordnete Spiegel, oder
   eine Mehrzahl halbkreisförmig um den Kreismittelpunkt angeordnete optische Filter- und/oder Linsen-Konstruktionen,
   und optional auf dem zweiten Halbkreis
- eine Mehrzahl weitere halbkreisförmig um den Kreismittelpunkt
   angeordnete Spiegel, oder
   eine Mehrzahl weitere halbkreisförmig um den Kreismittelpunkt angeordnete optische Filter- und/oder Linsen-Konstruktionen,
   wobei als Erfassungseinheiten jeweils Kepler-Teleskope an die Spiegel oder an die optischen Filter- und/oder Linsen-Konstruktionen angeschlossen sind, und an die Teleskope optische Faserbündel angeschlossen sind, die zu der einzigen optischen zweidimensionalen Detektoreinheit führen, und wobei
   im Kreismittelpunkt das zu untersuchende Objekt angeordnet wird.

Das emittierte und erfasste Licht kann dabei Infrarotlicht, sichtbares Licht, UV-Licht oder eine Kombination davon sein.

Dabei ist es erfindungsgemäß möglich, die Vorrichtung so zu gestalten, dass das ganze emittierte Licht eines Objektes erfasst wird, oder dass nur ein Teil des emittierten Lichts erfasst und verarbeitet wird, so dass bestimmte Eigenschaften gezielt beobachtet, geprüft, überwacht und verarbeitet werden können.

In der Mitte der Vorrichtung wird das Objekt platziert; das Objekt muss dabei in irgendeiner Form Licht emittieren, dies kann durch Chemilumineszenz, Biolumineszenz oder durch gezielte Anregung von außen als Fluoreszenz bzw. Phosphoreszenz geschehen.

Auch möglich ist es, das Objekt anzustrahlen und das Durchlicht zu detektieren, welches - z.B. durch Blasen - auch gestreut sein kann. Solcherart "durchleuchtete" Objekte werden im Rahmen der vorliegenden Erfindung zu den Licht emittierenden Objekten gezählt, da sie aus dem Blickwinkel des Detektors leuchten.

Um das Objekt herum, d.h. um den Mittelpunkt der Vorrichtung, sind verschiedene Detektoreneinheiten angeordnet.

Die Erfassungseinheiten können dabei alle in der gleichen Entfernung zum Objekt stehen, oder in verschiedenen Entfernungen; bevorzugt ist es, wenn die Erfassungseinheiten alle in der gleichen Entfernung zum Objekt stehen.

In einer Variante der vorliegenden Erfindung sind die verschiedenen Erfassungseinheiten gleichmäßig um das Objekt herum angeordnet, das heißt dass sie vom Objekt ausgesehen jeweils den gleichen Winkelabstand haben. In einer Variante der vorliegenden Erfindung sind die verschiedenen Erfassungseinheiten nicht gleichmäßig um das Objekt herum angeordnet.

Die Anzahl der Erfassungseinheiten richtet sich dabei nach der zu erzielenden beziehungsweise gewünschten Auflösung; je mehr Erfassungseinheiten, desto höher die Auflösung.

In der Regel wird ein Kompromiss zwischen Auflösung und apparativen Aufwand beziehungsweise monetären Aufwand eingegangen werden.

Minimal werden drei, bevorzugt mindestens fünf, besonders bevorzugt mindesten 7 und insbesondere bevorzugt mindestens 9 Erfassungseinheiten angeordnet.

Es ist z.B. möglich, Spiegel in einem Winkel von 45° anzuordnen, so dass die Erfassungseinheiten im 90° Winkel zur eigentlichen Detektionsebene angeordnet sind - auf diese Art und Weise wird die Vorrichtung zwar etwas höher, dafür aber auch weniger breit

Es ist aber genauso möglich, die Spiegel in beliebigen anderen Winkeln anzuordnen; die Anordnung der Spiegel hat keinen Einfluss auf die Detektionsergebnisse, sofern die Teleskope in der Neigung an die Winkel der Spiegel angepasst sind.

Es ist möglich, anstelle von rein reflektierenden Spiegeln solche einzusetzen, die bestimmte optische Wellenlängen herausfiltern, dies kann z.B. durch Verwendung spezieller Gläser beziehungsweise durch Beschichtungen erreicht werden.

In einer Variante ist es auch möglich, (teil-)durchlässige Spiegel zu verwenden, wodurch eine Aufspaltung des Signals erreicht werden kann.

Den Erfassungseinheiten können optische Filter und/oder Linsen vorgeschaltet sein, wodurch beispielsweise unerwünschte Wellenlängen oder Polarisationsebenen herausgefiltert werden können.

Die von den Erfassungseinheiten erfassten Signale werden im Rahmen der vorliegenden Erfindung auf eine einzige optische zweidimensionale Detektoreinheit geführt.

Dabei erfolgt die Übertragung von den Erfassungseinheiten auf die Kamera durch zwischengeschaltete optische Glasfaserbündel.

Im Rahmen der vorliegenden Erfindung können Glasfasern gebündelt werden zu Glasfaserbündeln und diese wiederum zu Glasfaserkabeln zusammengefasst werden.

Zwischen die Erfassungseinheiten und die Kamera können in einer Variante der vorliegenden Erfindung optische Filter oder Linsen angeordnet werden, wodurch beispielsweise unerwünschte Wellenlängen oder Polarisationsebenen herausgefiltert werden können.

Die in der vorliegenden Erfindung einsetzbare Kamera ist eine Digitalkamera, dabei kann der Sensor der Kamera bevorzugt auf CCD- oder auf CMOS-Technologie beruhen.

Falls eine höhere Empfindlichkeit verlangt ist, als die Kamera an sich gestattet, kann zur Verstärkung zwischen die von den Erfassungseinheiten kommenden Signale und die Kamera eine Verstärkereinheit geschaltet werden; Verstärkereinheit und Kamera werden zusammenfassend auch als intensivierte Kamera oder auch i-Kamera bezeichnet.

Es ist im Rahmen der vorliegenden Erfindung möglich, anstelle einer Kamera lediglich einen CCD bzw. CMOS-Sensor als Detektor einzusetzen (dies kann eine Kamera sein, bei der die Optik entfernt wurde, bzw. eine SLR-Kamera ohne angesetzte Optik).

Das der Kamera aufgezeichnete Signal kann entweder direkt als Bilddatei ausgegeben werden, oder die aufgezeichneten Daten können als originäre Daten verwendet werden, die durch weitere Algorithmen aufgearbeitet werden.

Es ist möglich, im Rahmen der vorliegenden Erfindung handelsübliche, preiswerte digitale Kameras zu verwenden. In einer Variante können allerdings auch beliebige andere Kameras, inklusive Spezialkameras, verwendet werden; diese können z.B. direkt für IR- oder UV-Lichtempfang, im Hinblick auf deren Verstärkung, die Bildfolgerate und/oder die Belichtungszeiten optimiert sein.

In einer Variante der vorliegenden Erfindung werden die Spiegel oder optischen Filter- und/oder Linsen-Konstruktionen derart ausgewählt, dass sie für die jeweils zu untersuchende Spezies in ihren Reflektions- oder Transmissionseigenschaften angepasst sind, insbesondere durch Anpassung an die von der Spezies bzw. Probe ausgehenden Lichtwellenlängen.

Gegenstand der vorliegenden Erfindung ist ferner ein schnelles optisches Tomographieverfahren, bei dem eine Spezies bzw. Probe optisch untersucht wird, die detektierten Signale in elektronische Daten umgesetzt werden, die ermittelten elektronischen Daten durch einen mathematischen Algorithmus verarbeitet und die verarbeiteten Daten ausgegeben werden, wobei eine Vorrichtung wie eben weiter oben beschrieben eingesetzt wird.

Dabei werden die verarbeiteten Daten in einer Variante als mindestens eine Bilddatei ausgegeben.

In einer anderen Variante werden die Daten als Rohdaten ausgegeben, ohne zwischengeschaltete algorithmische Aufarbeitung.

In einer weiteren Variante werden die verarbeiteten Daten an eine Steuerungseinheit ausgegeben, wodurch es möglich wird, Prozesse direkt anhand der detektierten Daten zu steuern.

Die Vorrichtung gemäß vorliegender Erfindung ist damit nicht ausschließlich auf ein bildgebendes Verfahren beschränkt, sondern kann hervorragend auch zur Überwachung und Regelung von Prozessen eingesetzt werden, bei denen optisch erfassbare Vorgänge von der Prozessführung abhängig sind. Zum Beispiel können Verbrennungsanlagen gesteuert werden, indem eine oder mehrere Spezies in der Flamme überwacht werden; ist die Konzentration der Spezies zu hoch oder zu niedrig, ist dies Hinweis auf eine nicht ideale Verbrennung und entsprechend der erfassten Daten wird die Verbrennung nachgeregelt, z.B. durch Variation der Brennstoffmenge.

Dieses Prinzip lässt sich auch zur Steuerung von fluidischen Prozessen anwenden, sofern eine oder mehrere Licht emittierende Spezies (z.B. per Fluoreszenz) zugegen sind; gleiches gilt für Spezies die durchleuchtet werden, wobei eine Lichtstreuung gegeben sein kann, z.B. durch Blasenbildung.

In einer Variante der vorliegenden Erfindung wird aus den verarbeiteten Daten ein zweidimensionales, tomographisches Abbild der zu untersuchenden Spezies bzw. Probe erstellt.

Weiterhin Gegenstand der vorliegenden Erfindung ist ein Verfahren zur optischen Bestimmung von lumineszierenden Spezies, bei dem mit einer Vorrichtung wie eben weiter oben beschrieben eine lumineszierende Spezies bzw. Probe optisch untersucht und das Ergebnis in Form von maschinenlesbaren Daten, bevorzugt als mindestens eine Bilddatei, ausgegeben wird.

Die erfindungsgemäße Vorrichtung wird in einer bevorzugten Variante als Tomograph für die Untersuchung und Verarbeitung von optisch erfassbaren Eigenschaften einer Spezies bzw. Probe verwendet.

Im Rahmen der vorliegenden Erfindung können alle Spezies bzw. Proben untersucht werden, die optisch erfassbare Eigenschaften aufweisen.

In einer Variante der vorliegenden Erfindung sind die optisch erfassbaren Eigenschaften Bio- oder Chemilumineszenz, bevorzugt Chemilumineszenz.

Die Lumineszenz kann dabei von selbst auftreten, bei Flammen durch deren chemische Reaktionen bzw. Temperatur ist dies beispielsweise der Fall, oder in der erfindungsgemäßen Vorrichtung erzeugt werden, z.B. durch zusätzliche Anregung mittels weiterem Energieeintrag, wie Laserstrahlen oder lampen.

In letzterem Fall kann die erfindungsgemäße Vorrichtung um eine Vorrichtung zum Energieeintrag, bevorzugt einen Laser, erweitert werden.

Das grundlegende Funktionsprinzip der vorliegenden Erfindung beruht auf einer limitierten Anzahl a priori festgelegter Detektionswinkel und der Wahl von Erfassungseinheiten, und zusätzlichen Lichtleitern, zur Signalübermittlung auf eine Kamera.

Dieses unterscheidet sich signifikant von den aus dem Stand der Technik bekannten Ansätzen durch den Einsatz von lichtdurchlässigen Erfassungseinheiten, und zusätzlichen Lichtleitern, die mit einem Detektor, insbesondere einer intensivierten CCD-Kamera, verbunden sind.

Im Stand der Technik hingegen werden entweder "klassische Tomographieanordnungen" verwendet, bei denen ein Kamerasystem um das zu untersuchende Objekt rotiert, bei denen bedingt durch geringe realisierbare Umlaufgeschwindigkeiten allenfalls sehr langsame fluktuierende Untersuchungsobjekte untersucht werden können, oder Linsensysteme in Verbindung mit einem photographischen Film, was, neben dem Umstand, dass nach der Messung eines einzelnen Events der photographische Film mühsam und zeitraubend entwickelt werden muss, zu Lasten der Empfindlichkeit und damit der Belichtungszeit geht.

Erst durch den erfindungsgemäßen Einsatz von Erfassungseinheiten und zusätzlichen Lichtleitern in Verbindung mit einer Kamera, insbesondere einer intensivierten CCD-Kamera, als Detektor eröffnet sich im Rahmen der vorliegenden Erfindung die Möglichkeit, dass man gleichzeitig die folgenden vorteilhaften Eigenschaften miteinander verbindet:
(1) hohe Empfindlichkeit des Detektorsystems,
(2) bedingt durch die hohe Empfindlichkeit ist der Nachweis sehr geringer Spezieskonzentrationen möglich, insbesondere auch im ppb-Bereich bei fluoreszierenden Spezies in der Gasphase, selbst bei Temperaturen >2000°C,
(3) die hohe Empfindlichkeit ermöglicht die Realisierung sehr kurzer Belichtungszeiten, insbesondere von <25 Mikrosekunden bei Konzentrationen der zu untersuchenden Spezies im ppb-Bereich in der Gasphase auch bei Raumtemperatur; bei höherer Konzentration oder bei höherem Druck bzw. in Flüssigkeiten sind entsprechend noch kürzere Belichtungszeiten erreichbar,
(4) schnelle Bildfolge und damit Online-Messungen sind möglich, insbesondere können Wiederholraten von einigen kHz erreicht werden,
(5) im Vergleich mit den anderen Ansätzen entstehen sehr geringe apparative Kosten.

Die gleichzeitige Erfüllung der Eigenschaften (1) bis (5) ist mit anderen optischen tomographischen Verfahren des Standes der Technik nicht möglich.

Im Stand der Technik sind Lösungsansätze zu finden, die sich aber im Hinblick auf Nachweisempfindlichkeit, Signalintegrationszeit, Wiederholrate, räumlicher Auflösung zumindest in einem der genannten Punkte signifikant unterscheiden. Erst durch die erfindungsgemäße Vorrichtung bzw. das erfindungsgemäße Verfahren konnten Möglichkeiten gefunden werden, die die fünf genannten Eigenschaften gleichzeitig erfüllen.

Da die Konzentration von z.B. OH* mit der Wärmefreisetzung von Flammen in Zusammenhang steht, können mittels der vorliegenden Erfindung in einer industriellen Feuerungsanlage Verbrennungsinstabilitäten, die zu Brennkammerschwingungen führen und ein großes Problem darstellen, online messtechnisch erfasst und darüber hinaus zur Prozessüberwachung bzw. Prozesssteuerung genutzt werden.

Die vorliegende Erfindung kann in den unterschiedlichsten technischen Bereichen eingesetzt werden, bei denen innerhalb einer Schnittebene die räumliche Verteilung einer Substanz oder gegebenenfalls an dessen Stelle ein geeigneter Tracer in einem optisch transparenten Medium ermittelt werden soll. Neben der optischen Transparenz des Mediums ist die einzige weitere Voraussetzung, dass die zu untersuchende Substanz entweder:
(a) selbst Licht (auch IR- und/oder UV-Licht) emittiert, bevorzugt durch chemische Reaktion,
(b) durch Ein- oder Durchstrahlung von Licht (oder Energie) zum Leuchten gebracht werden kann, bevorzugt durch Fluoreszenz oder Phosphoreszenz,
(c) ein- bzw. durchgestrahltes Licht an manchen Stellen des zu untersuchenden Mediums nicht zum Leuchten gebracht werden kann in einem ansonsten fluoreszierenden Fluid, wie dies auch durch Blasen, bevorzugt Luft- oder Dampf-Blasen geschehen kann.

Durch die Verwendung von Teleskopen in Verbindung mit der Kopplung auf einen einzelnen Detektor in Form einer Kamera, wurde die erfindungsgemäße Vorrichtung und das erfindungsgemäße Verfahren ermöglicht, welches die in den Punkten (1) bis (5) geschilderten Vorteile, welche die aus dem Stand der Technik bekannten Verfahren nicht oder nur teilweise aufweisen, aufweist.

Bedingt durch die hohe Anzahl an Kanälen konnte im Rahmen der vorliegenden Erfindung die räumliche Auflösung deutlich erhöht werden.

In einer Variante der vorliegenden Erfindung konnte durch die Einkopplung der Lichtsignale in optische Fasern mittels Teleskopen, sowie den Einsatz einer i-CCD-Kamera eine um Größenordnungen höhere Empfindlichkeit im Vergleich zu den Systemen des Standes der Technik erreicht werden.

Ein weiterer Vorteil der vorliegenden Erfindung im Vergleich zu Geräten des Standes der Technik ist, dass die apparativen Kosten um ein Vielfaches niedriger sind, bei einer gleichzeitig erheblich höheren räumlichen Auflösung.

Mit der vorliegenden Erfindung sind insbesondere auch Online-Messungen hoch instationärer Prozesse zur Untersuchung von Objekten, die Überwachung von Prozessen oder die Steuerung von Prozessen möglich.

Die ermittelten Daten werden im Rahmen der vorliegenden Erfindung durch einen mathematische Algorithmus verarbeitet.

In einer Variante der vorliegenden Erfindung kann für den tomographischen Rekonstruktionsalgorithmus ein iteratives Rekonstruktionsverfahren verwendet werden.

Die erfindungsgemäße Vorrichtung/Vorrichtung ist bevorzugt ein optischer Tomograph.

Das erfindungsgemäße Verfahren ist bevorzugt ein schnelles optisches Tomographieverfahren.

Die erfindungsgemäße Vorrichtung und das erfindungsgemäße Verfahren ermöglichen die Anwendung der Technik in den unterschiedlichsten Branchen und Bereichen, insbesondere zur Ermittlung der räumlichen Verteilung chemilumineszierender Spezies in turbulenten Flammen.

Mit der vorliegenden Erfindung wird eine ausreichende räumliche Auflösung, bei einer typischen Abmessung von industriellen Flammen von ca. 5 - 10 cm, erreicht, um die gefalteten Flammenfronten innerhalb der Flamme adäquat zu unterscheiden. Im Rahmen der vorliegenden Erfindung konnten Auflösungswerte von kleiner oder gleich 1 - 2 mm in der apparativen Umsetzung des Messverfahrens realisiert werden.

Mit der vorliegenden Erfindung wird es weiterhin ermöglicht, die Verteilung einer chemilumineszierenden Spezies (z.B. OH*), die in einer Flamme lediglich in der Reaktionszone und dort nur mit äußerst niedriger Konzentration, insbesondere im ppb-Bereich, vorhanden ist, noch dazu mit hoher zeitlicher Auflösung, insbesondere von <200 Mikrosekunden, zu ermitteln.

Die räumliche Faltung der Reaktionszonen einer turbulenten Flamme kann mit der vorliegenden Erfindung lokalisiert werden, ohne dass es innerhalb der Belichtungszeit zu räumlichen Auswaschungen bei der Rekonstruktion durch die schnelle Ausbreitung der Flammenfronten führen würde. Zudem konnte sichergestellt werden, dass das bei kürzer werdender Belichtungszeit zunehmende Signalrauschen die tomographische Rekonstruktion nicht verhindert.

Das erfindungsgemäße tomographische Verfahren lässt sich in solchen Bereichen anwenden, bei denen in einem optisch transparenten Fluid eine selbstleuchtende oder zum Leuchten gebrachte Substanz im Hinblick auf deren räumliche Konzentrationsverteilung hin untersucht werden soll. In technischen Verbrennungseinrichtungen lassen sich damit ganz gezielt chemilumineszierende Spezies, wie beispielsweise CH*, OH*, C₂*, HCO*, CO* und CO₂* etc., bevorzugt ausgewählt aus der Gruppe bestehend aus CH*, OH*, C₂*, HCO*, CO* und CO₂*, detektieren, um damit Informationen mit hoher zeitlicher Auflösung (<200 Mikrosekunden) über die Wärmefreisetzung räumlich aufgelöst zu erhalten.

Die erfindungsgemäße Vorrichtung und das erfindungsgemäße Verfahren können in Kraftwerken Verwendung finden.

Die erfindungsgemäße Vorrichtung und das erfindungsgemäße Verfahren können weiterhin Verwendung finden:
- bei Herstellern von Messgeräten, deren Produkte zur Untersuchung von Vorgängen in Verbrennungseinrichtungen bzw. Verbrennungsmotoren eingesetzt werden,
- in verbrennungsrelevanten Anwendungen, Fluidmechanik und Materialforschung, (inner-) motorischen Einsatzbereichen,
- Medizintechnik
- bei der Online-Untersuchung von Konzentrationsverteilungen in Strömungen.
- im Chemieingenieurwesen und in der Verfahrenstechnik.

Ein weiteres Anwendungsfeld der vorliegenden Erfindung sind weiterhin online Prozesskontrollen, bei denen z. B. innerhalb eines Rohres oder ähnlichem der räumliche Reaktionsfortschritt oder die Vermischung kontrolliert werden sollen.

Aufgrund der der vorliegenden Erfindung zugrunde liegenden Funktionsweise sind mögliche Anwendungen sehr vielfältig. Daher kann diese Auflistung nicht den Anspruch der Vollständigkeit im Hinblick auf mögliche Anwendungen erheben.

Im folgenden wird die vorliegende Erfindung unter Zuhilfenahme von drei exemplarischen Ausgestaltungen der vorliegenden Erfindung näher erläutert.

Eine erste exemplarische Ausgestaltung der vorliegenden Erfindung ist eine Vorrichtung mit einer kreisförmigen Konstruktion umfassend auf einem ersten Halbkreis
- zehn, halbkreisförmig um den Kreismittelpunkt angeordnete Spiegel,
   oder
   zehn, halbkreisförmig um den Kreismittelpunkt angeordnete optische Filter- und/oder Linsen-Konstruktionen,
und optional auf dem zweiten Halbkreis
- neun, weitere halbkreisförmig um den Kreismittelpunkt angeordnete Spiegel, oder
   neun, weitere halbkreisförmig um den Kreismittelpunkt angeordnete optische Filter- und/oder Linsen-Konstruktionen, wobei
jeweils Kepler-Teleskope an die Spiegel oder an die optischen Filter- und/oder Linsen-Konstruktionen angeschlossen sind, und an die Teleskope optische Faserbündel angeschlossen sind, die zu einem Kabel zusammengefasst werden und die zu einem einzelnen Detektor in Form einer Kamera oder einem CCD- bzw. CMOS-Sensor, insbesondere einer intensivierten CCD-Kamera, führen, und wobei
im Kreismittelpunkt die zu untersuchende Spezies bzw. Probe angeordnet wird.

In einer Variante der ersten exemplarischen Ausgestaltung besteht jedes optische Faserbündel aus mehreren optischen Fasern, insbesondere aus 90 optischen Fasern.

In einer Variante der ersten exemplarischen Ausgestaltung sind die Spiegel oder optischen Filter- und/oder Linsen-Konstruktionen jeweils zueinander in einem Winkelabstand von 18°, gesehen vom Kreismittelpunkt aus, angeordnet, wobei zwischen den jeweils äußersten Spiegeln oder optischen Filter- und/oder Linsen-Konstruktionen der Halbkreise ein Winkelabstand von 27° besteht.

In einer Variante der ersten exemplarischen Ausgestaltung, in der keine Spiegel verwendet werden, detektieren die Teleskope das Signal dann direkt in der Detektionsebene ohne Umlenkung.

Anstelle der Spiegel können in dieser Variante optische Filter- und/oder Linsen-Konstruktionen eingesetzt werden.

In einer bevorzugten Variante der ersten exemplarischen Ausgestaltung werden Spiegel und keine optischen Filter- und/oder Linsen-Konstruktionen verwendet, und die Spiegel sind Aluminiumspiegel, insbesondere dielektrische Spiegel oder UV-verbesserte Aluminiumspiegel, d.h. Aluminiumspiegel, die durch fachbekannte Oberflächenbehandlung ein optimiertes Reflektionsverhalten für UV-Licht aufweisen.

In einer Variante der ersten exemplarischen Ausgestaltung wird die zu untersuchende Spezies ausgewählt aus der Gruppe bestehend aus CH*, OH*, C₂*, HCO*, CO*, CO₂* und Mischungen davon.

Es ist demgemäß in einer Variante des ersten exemplarischen Gegenstands möglich, verschiedene Spezies nebeneinander zu bestimmen.

Kepler-Teleskope haben eine Objektivlinse, eine Okularlinse und eine dazwischenliegende Iris-Blende.

Die Kepler-Teleskope erfüllen bei der vorliegenden Erfindung die folgenden Aufgaben:
(1) Die Größe des abgebildeten Objekts wird auf die Dimension des Sensors/der Photokathode des Bildverstärkers der (intensivierten) CCD-Kamera verkleinert.
(2) Das Kepler-Teleskop gewährleistet, dass komplanare und parallele Strahlen, die durch z.B. OH* in der Detektionsebene emittiert werden, durch das ganze Detektionssystem geleitet werden, was für ein tomographische Rekonstruktionsverfahren wichtig ist.

Eine bevorzugte Variante der ersten exemplarischen Ausgestaltung ist es, in einer Ebene in turbulenten Flammen die Chemilumineszenz von OH* räumlich aufgelöst zu ermitteln. Aufgrund der bei Raumtemperatur im Vergleich zu Verbrennungstemperatur geringeren Dichte erhöht sich in Flammen die Belichtungszeit gegenüber dem oben angegebenen Wert (<25 µs) auf etwa 200 Mikrosekunden.

Im Rahmen der ersten exemplarischen Ausgestaltung werden zur tomographischen Rekonstruktion in einer bevorzugten Variante 900 optische Kanäle verwendet, wobei die Anzahl der optischen Kanäle in einer Variante der vorliegenden Erfindung ohne nennenswerte apparative Veränderungen vornehmen zu müssen auf 1710 erweitert werden kann.

Die Anzahl der optische Kanäle ergibt sich dabei aus der Anzahl der optischen Fasern.

Eine zweite exemplarische Ausgestaltung der vorliegenden Erfindung ist eine Vorrichtung mit einer kreisförmigen Konstruktion umfassend
auf einem ersten Halbkreis
- zehn halbkreisförmig um den Kreismittelpunkt, jeweils zueinander in einem Winkelabstand von 18°, gesehen vom Kreismittelpunkt aus, angeordnete in einem Winkel von 45° zur Detektionsebene gedrehte UV-verbesserte Aluminiumspiegel,
und optional auf dem zweiten Halbkreis
- neun, weitere halbkreisförmig um den Kreismittelpunkt, jeweils zueinander in einem Winkelabstand von 18°, gesehen vom Kreismittelpunkt aus, angeordnete in einem Winkel von 45° zur Detektionsebene gedrehte UV-verbesserte Aluminiumspiegel, wobei
zwischen den jeweils äußersten Spiegeln der Halbkreise ein Winkelabstand von 27° besteht, und wobei jeweils rechtwinklig zur Detektionsebene angeordnete Kepler-Teleskope mit einer Objektivlinse, einer Okularlinse und einer dazwischenliegenden Iris-Blende an die Aluminiumspiegel angeschlossen sind, und an die Teleskope wiederum optische Faserbündel, bestehend jeweils aus 90 optischen Fasern, angeschlossen sind, die zu einem Kabel zusammengefasst werden und dann zu einem einzelnen Detektor in Form einer intensivierten CCD-Kamera führen, und wobei im Kreismittelpunkt die zu untersuchende chemilumineszierende Spezies bzw. Probe angeordnet wird.

Eine dritte exemplarische Ausgestaltung der vorliegenden Erfindung ist ferner ein schnelles optisches Tomographieverfahren, bei dem eine chemilumineszierende Spezies bzw. Probe optisch untersucht wird, die detektierten Signale in elektronische Daten umgesetzt werden, die ermittelten elektronischen Daten durch einen mathematischen Algorithmus verarbeitet und die verarbeiteten Daten als zweidimensionales, tomographisches Abbild der zu untersuchenden Spezies bzw. Probe ausgegeben werden, wobei eine Vorrichtung wie eben weiter oben beschrieben eingesetzt wird.

In einer Variante der vorliegende Erfindung sind die drei genannten exemplarischen Ausgestaltungen der vorliegenden Erfindung, bevorzugte Gegenstände der vorliegenden Erfindung.

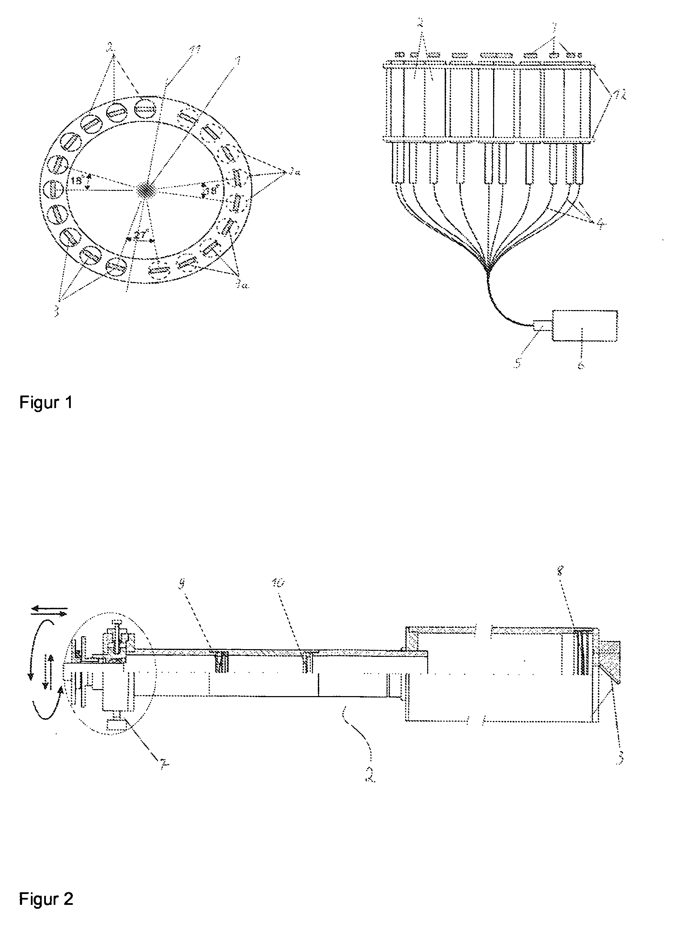

Im folgenden wird die vorliegende Erfindung unter Zuhilfenahme der Figuren 1 bis 7 näher erläutert.

Die Figuren 1 bis 7 illustrieren dabei eine besonders vorteilhafte Ausgestaltung, zur Untersuchung von OH* die belegt, dass mit der vorliegenden Erfindung extrem gute Ergebnisse erzielt werden, nämlich Detektion von sich schnell verändernden Spezies/Proben (-verteilung) in Milliardstel-Konzentrations-Bereichen (ppb).

Beschreibung der Figuren:
Die Zeichnungen sind nicht unbedingt maßstabsgetreu. Aus Gründen der Klarheit und zur einfacheren Darstellung können einige Merkmale der Erfindung übertrieben groß oder in schematischer Form dargestellt sein,
ebenso können demgemäß einige Details von konventionellen bzw. bekannten Elementen nicht dargestellt sein.

Bei mehreren gleichen Bauteilen/Bestandteilen in einer Zeichnung wurden aus Gründen der Übersichtlichkeit nicht alle markiert, sondern jeweils maximal drei.

### Bezugszeichenliste:

- 1: Objekt, bzw. Flamme
- 2: Erfassungseinheit bzw. Teleskop
- 2a: optionales Teleskop
- 3: 45° Aluminiumspiegel
- 3a: optionaler 45° Aluminiumspiegel
- 4: optische Faserbündel
- 5: Zwinge
- 6: optische zweidimensionale Detektoreinheit
- 7: einstellbare Kabelbefestigung
- 8: Objektivlinse
- 9: Okularlinse
- 10: Iris-Blende
- 11: Durchmesser-Ebene
- 12: segmentierter Aluminiumring

### Figur 1:

In Figur 1 ist eine schematische Darstellung des tomographischen Rekonstruktionsaufbaus mit einem Satz von zehn Teleskopen 2 in einer Aufsicht (linker Teil der Figur) und einer seitlichen Ansicht (rechter Teil der Figur) dargestellt. Die OH*-Chemilumineszenz Signale, die sich in der Horizontalebene ausbreiten werden durch UV-verbesserte 45° Aluminiumspiegel 3, (73 mm breit, 22 mm hoch) in die vertikale Richtung reflektiert, um den Aufbau so kompakt wie möglich und die UV-optischen Kabel 4 so kurz wie möglich zu halten. Die zehn Teleskope 2 sind in einem Halbkreis um die im Mittelpunkt des Kreises befindliche Flamme 1 angeordnet. Die Teleskope 2 sind jeweils durch einen Winkel von 18° voneinander getrennt angeordnet, wobei das erste und das letzte Teleskop 2 in einem Winkel von 9° zu der Durchmesser-Ebene 11, die in Figur 1 eingezeichnet ist, angeordnet sind. Die Vorrichtung kann in einer Variante durch neun weitere Teleskope 2a erweitert werden, insbesondere für den Fall, dass sich herausstellt, dass zehn Teleskope 2 für eine adäquate tomographische Rekonstruktion von hochturbulenten Flammen nicht ausreichend sind, oder aus anderen Gründen eine höhere Datenmenge gewünscht ist. Dabei können die neun weiteren Teleskope 2a auf dem anderen Halbkreis der Vorrichtung angeordnet werden und im Vergleich zu dem ersten Teleskop-Satz um 9° versetzt angeordnet werden. Der Blickwinkel jedes Teleskops 2a des zweiten Satzes ist dabei jeweils auf das Zentrum einer Lücke zwischen zwei Teleskopen 2 des ersten Satzes gerichtet. Diese zusätzlichen, optionalen Teleskope 2a des zweiten Satzes sind in Figur 1 mit gestrichelten Linien dargestellt.

Die Teleskope 2 und gegebenenfalls 2a werden in Position gehalten durch zwei segmentierte Aluminiumringe 12 (äußerer Durchmesser 92 cm, innerer Durchmesser 63 cm), die durch Aluminiumröhren auf 32 cm Abstand gehalten werden. Wie aus der Seitenansicht in Figur 1 hervorgeht, sind die oberen Enden der Teleskope 2 und gegebenenfalls 2a mit dem ersten Ring 12 etwas unterhalb von den Aluminiumspiegeln fixiert. Der zweite Ring 12 befindet sich am unteren Ende der Teleskope 2 und gegebenenfalls 2a, etwas oberhalb der Position, an der der Durchmesser der Teleskope 2 und gegebenenfalls 2a von 80 mm auf 40 mm reduziert wird.

Jedes optische Faserbündel 4 besteht aus 90 optischen Fasern, hergestellt von Ceram Optec (Optran UV). Die Fasern sind nebeneinander entlang einer geraden Linie angeordnet. Der Gesamtdurchmesser der Fasern beträgt 125 µm inklusive Mantel und Polyamid-Schutzummantelung.

Wie aus dem rechten Teil von Figur 1 ersichtlich, werden die zehn einzelnen Faserbündel 4 in einer Metallhülse 5 (Breite 22 mm, Höhe 11 mm) zu einem einzigen Kabelstrang vereinigt, in dem die Fasern der Teleskope in zehn Reihen angeordnet sind.

Zwischen der Hülse 5 und dem Eintrittsfenster des Bildverstärkers ist aufgrund der relativ großen numerischen Apertur NA = n * sin Tₘₐₓ = 0.22 (für den Refraktionsindex von Luft n = 1) der Fasern und der nicht zu vernachlässigenden Distanz zwischen dem Eintrittsfenster und der Photokathode der intensivierten CCD-Kamera 6 ein Kondensor angeordnet.

Die Divergenz des aus den Fasern kommenden Lichts ist 2 * Tₘₐₓ = 25°, was zu Überlagerungen zwischen den Signalen aus den einzelnen angrenzenden Fasern führen könnte. Der Kondensor besteht aus zwei identischen, mit Antireflektionsbeschichtungen versehenen Quarzlinsen von 25 mm Durchmesser und einer Brennweite von 30 mm. Aufgrund der hohen Blendenzahl f# werden asphärische Linsen verwendet, um die sphärische Abberation zu minimieren. Zusätzlich ist zwischen den Linsen und dem iCCD-Eintrittsfenster ein Schott Glasfilter UG11 (Dicke 2 mm), das im Bereich von 250 nm - 395 nm UV-durchlässig ist, eingesetzt. Dieses Filter garantiert auf der einen Seite eine im Vergleich zu z.B. Interferenzfiltern höhere Transmission (>80%) für die OH*-Chemilumineszenz-Signale und unterbindet auf der anderen Seite Chemilumineszenz-Anteile von anderen Spezies.

### Figur 2:

In Figur 2 ist eine schematische Illustrationen der Teleskope 2, 2a wiedergegeben.

Die Teleskope 2, 2a weisen zwei Quarzlinsen, die mit Antireflektionsschichten versehen sind, die Objektivlinse (Brennweite F₁ = 474 +/- 2.3 mm (bei 310 nm); Durchmesser D₁ = 75 mm) und die Okularlinse (Brennweite F₂ = 71 +/- 0.5 mm (bei 310 nm); Durchmesser D₂ = 30 mm), auf.

Die Iris-Blende 10 ist in der Fokalebene beider Teleskoplinsen 8, 9 positioniert. Der Iris-Durchmesser wurde dabei zu Dₚ = 15 mm gewählt. Dieser Wert stellt einen Kompromiss zwischen optischer Auflösung des Systems und dem Auftreten von Vignettierungen auf der einen Seite und der Signalstärke auf der anderen Seite dar.

Am unteren Ende jedes Teleskops 2 und gegebenenfalls 2a befindet sich eine einstellbare Kabelbefestigung 7 zur optischen Ausrichtung, woran die optischen Faserbündel 4 befestigt sind.

### Figur 3:

In den abgebildeten Messergebnissen wurde von links nach rechts die Belichtungszeiten des optischen Tomographen sukzessive von 5 Millisekunden über 1 Millisekunde bis herunter zu 200 Mikrosekunden reduziert. Letztgenannte Belichtungszeit ist ausreichend kurz, um das Verfahren bei der vorgegebenen räumlichen Auflösung von 1 - 2 mm auch auf turbulente Flammen übertragen zu können. Die räumliche Faltung der Reaktionszonen einer turbulenten Flamme kann damit lokalisiert werden, ohne dass es innerhalb der Belichtungszeit zu räumlichen Auswaschungen bei der Rekonstruktion durch die schnelle Ausbreitung der Flammenfronten führen würde. Zudem konnte mit dieser Strategie sichergestellt werden, dass das bei kürzer werdender Belichtungszeit zunehmende Signalrauschen die tomographische Rekonstruktion nicht verhindert.

### Figur 4:

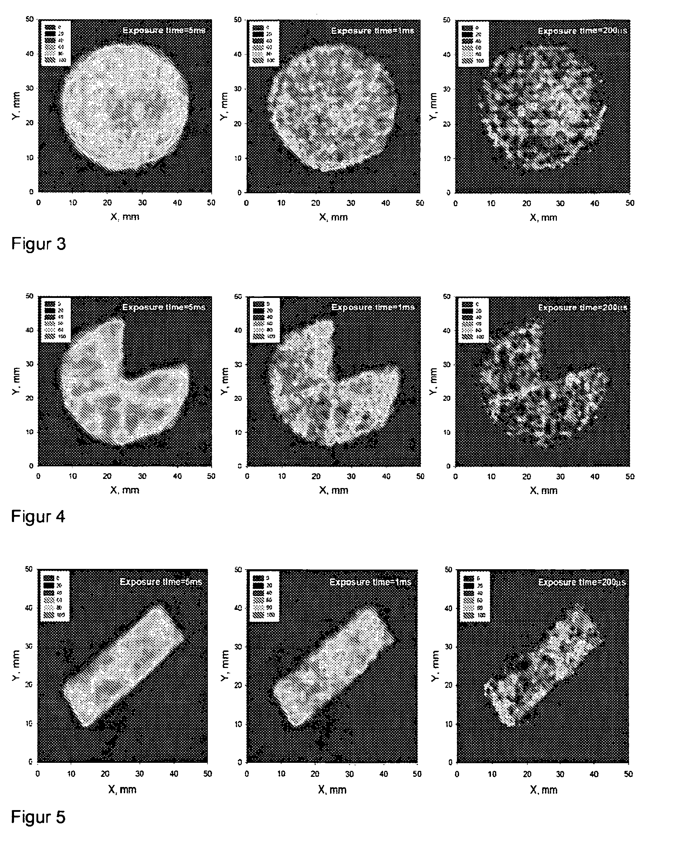

In Figur 3 ist die aus den gemessenen Signalen tomographisch rekonstruierte OH-Chemilumineszenz der Vormischflamme, die einen Durchmesser von 38 mm aufweist, bei unterschiedlichen Belichtungszeiten abgebildet. Figur 4 zeigt dagegen die gleiche Flamme, bei der allerdings ein Sektor der Brennermatrix, aus dem das vorgemischte Brennergas austritt, verdeckt wurde.

### Figur 5:

In Figur 5 hingegen wird lediglich ein rechteckförmiger Teil der runden Brennermatrix für das Brenngas freigegeben.

### Figur 6:

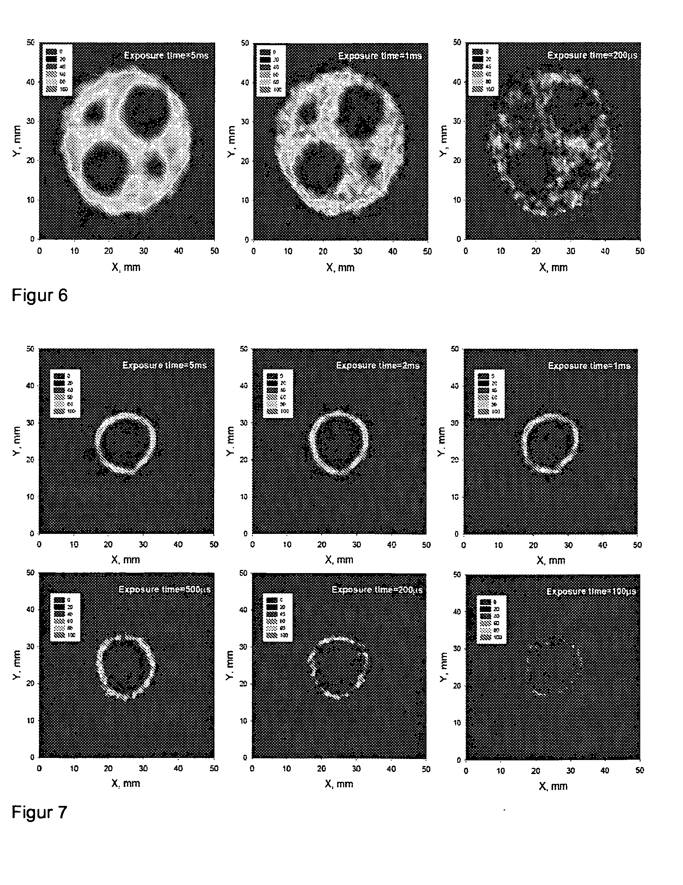

Bei der Figur 6 versperren auf der Winkelhalbierenden der Quadranten 1 und 3 eine kreisförmige Abdeckung mit jeweils 15 mm Durchmesser und bei den Quadranten 2 und 4 eine solche mit 6 mm Durchmesser den Gasaustritt aus der Brennermatrix an diesen Stellen.

### Figur 7:

Schließlich ist in Figur 7 die torusförmige OH*-Chemilumineszenz einer Diffusionsflamme zu erkennen.

In den Figuren 3 bis 7 sind einige Anwendungsbeispiele zur Detektion der Chemilumineszenz von OH-Radikalen für eine stöchiometrische, laminare, flache Methan-Vormischflamme (Figur 3 - 6) bzw. Methan-Diffusionsflamme (Figur 7) wiedergegeben. Hierbei wurden ganz gezielt laminare, stationäre Flammen mit bekannter Geometrie als Untersuchungsobjekt herangezogen, um die Qualität der tomographischen Rekonstruktion im Rahmen der vorliegenden Erfindung zu demonstrieren.

Alle Abbildungen bestätigen, dass die korrekte räumliche Verteilung mit der Vorrichtung und dem verwendeten Algorithmus bei den verschiedenen Belichtungszeiten erhalten werden.

## Patentansprüche

1. Vorrichtung mit einer kreisförmigen Konstruktion umfassend,
eine einzige optische zweidimensionale Detektoreinheit in Form einer Kamera (6), mindestens drei um den Mittelpunkt der Vorrichtung angeordnete optische Erfassungseinheiten (2), die von einem zu untersuchenden Objekt (1) ausgehendes Licht erfassen, wobei
die von den Erfassungseinheiten (2) erfassten Lichtsignale auf die einzige optische zweidimensionale Detektoreinheit geführt werden, und wobei im Mittelpunkt der Vorrichtung das zu untersuchende Licht-emittierende Objekt angeordnet wird, **dadurch gekennzeichnet, dass**
auf einem ersten Halbkreis
- eine Mehrzahl halbkreisförmig um den Kreismittelpunkt angeordnete Spiegel (3), oder
eine Mehrzahl halbkreisförmig um den Kreismittelpunkt angeordnete optische Filter- und/oder Linsen-Konstruktionen angeordnet sind,
und optional auf dem zweiten Halbkreis
- eine Mehrzahl weitere halbkreisförmig um den Kreismittelpunkt angeordnete Spiegel (3a), oder
eine Mehrzahl weitere halbkreisförmig um den Kreismittelpunkt angeordnete optische Filter- und/oder Linsen-Konstruktionen angeordnet sind, wobei
als Erfassungseinheiten jeweils Kepler-Teleskope (2), (2a) an die Spiegel (3), (3a) oder an die optischen Filter- und/oder Linsen-Konstruktionen angeschlossen sind, und an die Teleskope (2), (2a) optische Faserbündel (4) angeschlossen sind, die zu der einzigen optischen zweidimensionalen Detektoreinheit führen, und wobei
im Kreismittelpunkt das zu untersuchende Objekt (1) angeordnet wird.

2. Vorrichtung nach Anspruch 1, **dadurch gekennzeichnet, dass** das von dem Objekt (1) ausgehende Licht Infrarotlicht, sichtbares Licht und/oder UV-Licht ist.

3. Vorrichtung nach Anspruch 1, **dadurch gekennzeichnet, dass** das zu untersuchende Licht-emittierende Objekt (1) chemiluminesziert oder bioluminesziert, durch Einstrahlung angeregt Licht emittiert oder mittels Durchlicht Licht emittiert.

4. Vorrichtung nach Anspruch 1, **dadurch gekennzeichnet, dass**
auf dem ersten Halbkreis
- zehn, halbkreisförmig um den Kreismittelpunkt angeordnete Spiegel (3),
oder
zehn, halbkreisförmig um den Kreismittelpunkt angeordnete optische Filter- und/oder Linsen-Konstruktionen,
und optional auf dem zweiten Halbkreis
- neun, weitere halbkreisförmig um den Kreismittelpunkt angeordnete Spiegel (3a), oder
neun, weitere halbkreisförmig um den Kreismittelpunkt angeordnete optische Filter- und/oder Linsen-Konstruktionen
angeordnet sind.

5. Schnelles optisches Tomographieverfahren, bei dem
als Objekt (1) eine Spezies bzw. Probe optisch untersucht wird,
die detektierten Signale in elektronische Daten umgesetzt werden,
die ermittelten elektronischen Daten durch einen mathematischen Algorithmus verarbeitet und
die verarbeiteten Daten ausgegeben werden, bevorzugt als Rohdaten, mindestens
als eine Bilddatei oder als mindestens eine Steuerdatei, besonders bevorzugt als mindestens eine Bilddatei,
**dadurch gekennzeichnet, dass** eine Vorrichtung gemäß Anspruch 1 eingesetzt wird.

6. Verfahren nach Anspruch 5, **dadurch gekennzeichnet, dass** aus den verarbeiteten Daten ein dreidimensionales, tomographisches Abbild der zu untersuchenden Spezies bzw. Probe erstellt wird.

7. Verfahren zur optischen Bestimmung von Licht emittierenden Spezies, **dadurch gekennzeichnet, dass** diese mit einer Vorrichtung gemäß Anspruch 1 optisch untersucht und das Ergebnis als maschinenlesbare Daten, bevorzugt als mindestens ein Bilddatei, ausgegeben werden.

8. Verwendung einer Vorrichtung nach Anspruch 1 als Tomograph für die Untersuchung und Verarbeitung von optisch erfassbaren Eigenschaften einer Spezies bzw. Probe.

## Claims

1. Apparatus having a circular construction, comprising
a single optical two-dimensional detector unit in the form of a camera (6),
at least three optical capturing units (2) arranged about the centre of the apparatus, which optical capturing units capture light emitted by an object (1) to be examined, wherein
the light signals captured by the capturing units (2) are guided to the single optical two-dimensional detector unit, and wherein
the light-emitting object to be examined is arranged in the centre of the apparatus, **characterized in that**
arranged on a first semicircle are
- a multiplicity of mirrors (3) arranged in the shape of a semicircle about the centre of the circle, or
a multiplicity of optical filter and/or lens constructions arranged in the shape of a semicircle about the centre of the circle,
and optionally arranged on the second semicircle are
- a multiplicity of further mirrors (3a) arranged in the shape of a semicircle about the centre of the circle, or
a multiplicity of further optical filter and/or lens constructions arranged in the shape of a semicircle about the centre of the circle, wherein
in each case Keplerian telescopes (2), (2a) are connected as capturing units to the mirrors (3), (3a) or to the optical filter and/or a lens constructions, and optical fibre bundles (4), which lead to the single optical two-dimensional detector unit, are connected to the telescopes (2), (2a), and wherein
the object (1) to be examined is arranged in the centre of the circle.

2. Apparatus according to Claim 1, **characterized in that** the light emitted by the object (1) is infrared light, visible light and/or UV light.

3. Apparatus according to Claim 1, **characterized in that** the light-emitting object (1) to be examined is chemiluminescent or bioluminescent, emits light through excitation by irradiation or emits light by way of transmitted light.

4. Apparatus according to Claim 1, **characterized in that**
arranged on the first semicircle are
- ten mirrors (3) arranged in the shape of a semicircle about the centre of the circle, or ten optical filter and/or lens constructions arranged in the shape of a semicircle about the centre of the circle,
and optionally arranged on the second semicircle are
- nine further mirrors (3a) arranged in the shape of a semicircle about the centre of the circle, or nine further optical filter and/or lens constructions arranged in the shape of a semicircle about the centre of the circle.

5. Fast optical tomography method, in which
a species or sample is optically examined as an object (1),
the detected signals are converted to electronic data,
the ascertained electronic data is processed using a mathematical algorithm, and
the processed data is output, preferably as raw data, at least as an image file or as at least a control file, particularly preferably as at least an image file,
**characterized in that** an apparatus according to Claim 1 is used.

6. Method according to Claim 5, **characterized in that** a three-dimensional tomography image of the species or sample to be examined is produced from the processed data.

7. Method for optically determining light-emitting species, **characterized in that** said light-emitting species are optically examined with an apparatus according to Claim 1, and the result is output as machine-readable data, preferably as at least an image file.

8. Use of an apparatus according to Claim 1 as a tomograph for examining and processing optically capturable properties of a species or a sample.

## Revendications

1. Dispositif avec une construction circulaire comprenant une unique unité de détection optique en deux dimensions sous la forme d'une caméra (6), au moins trois unités d'acquisition optique (2) disposées autour du centre du dispositif, lesquelles font l'acquisition de la lumière provenant d'un objet (1) à analyser, dans lequel
les signaux lumineux acquis par les unités d'acquisition (2) sont guidés vers l'unique unité de détection optique en deux dimensions, et dans lequel
l'objet émettant de la lumière à analyser est disposé au centre du dispositif, **caractérisé en ce que**,
sur un premier demi-cercle,
- une pluralité de miroirs (3) disposés en forme de demi-cercle autour du centre du cercle, ou
une pluralité de constructions optiques de type filtres et/ou lentilles disposées en forme de demi-cercle autour du centre du cercle, sont mis en place
et **en ce que**, de manière optionnelle, sur le deuxième demi-cercle,
- une pluralité d'autres miroirs (3a) disposés en forme de demi-cercle autour du centre du cercle, ou
une pluralité d'autres constructions optiques de type filtres et/ou lentilles disposées en forme de demi-cercle autour du centre du cercle, sont mis en place, dans lequel,
en guise d'unités d'acquisition, des télescopes Kepler (2), (2a) sont respectivement raccordés aux miroirs (3), (3a) ou aux constructions optiques de type filtres et/ou lentilles, et des faisceaux de fibres optiques (4) sont raccordés aux télescopes (2), (2a), lesquels mènent vers l'unique unité de détection optique en deux dimensions, et dans lequel
l'objet (1) à analyser est disposé au centre du cercle.

2. Dispositif selon la revendication 1, **caractérisé en ce que** la lumière provenant de l'objet (1) est de la lumière infrarouge, de la lumière visible et/ou de la lumière UV.

3. Dispositif selon la revendication 1, **caractérisé en ce que** l'objet émettant de la lumière (1) à analyser est chimiluminescent ou bioluminescent, émet de la lumière en étant excité par irradiation ou émet de la lumière au moyen d'une lumière transmise.

4. Dispositif selon la revendication 1, **caractérisé en ce que**, sur le premier demi-cercle,
- dix miroirs (3) disposés en forme de demi-cercle autour du centre du cercle, ou
dix constructions optiques de type filtres et/ou lentilles disposées en forme de demi-cercle autour du centre du cercle,
et, de manière optionnelle, sur le deuxième demi-cercle
- neuf autres miroirs (3a) disposés en forme de demi-cercle autour du centre du cercle, ou
neuf autres constructions optiques de type filtres et/ou lentilles disposées en forme de demi-cercle autour du centre du cercle, sont mis en place.

5. Procédé de tomographie optique rapide, dans lequel on analyse optiquement, en guise d'objet (1), une espèce ou un échantillon,
les signaux détectés sont transformés en données électroniques,
les données électroniques déterminées sont traitées par un algorithme mathématique, et
les données traitées sont sorties, de préférence en tant que données brutes, au moins en tant qu'un fichier d'image ou au moins en tant qu'un fichier de commande, de manière particulièrement préférée au moins en tant qu'un fichier d'image,
**caractérisé en ce que** l'on utilise un dispositif selon la revendication 1.

6. Procédé selon la revendication 5, **caractérisé en ce que** l'on produit, à partir des données traitées, une représentation homographique tridimensionnelle de l'espèce ou de l'échantillon à analyser.

7. Procédé pour la détermination optique d'espèces émettant de la lumière, **caractérisé en ce que** celles-ci sont analysées optiquement avec un dispositif selon la revendication 1 et **en ce que** le résultat est sorti en tant que données lisibles par machine, de préférence au moins en tant qu'un fichier d'image.

8. Utilisation d'un dispositif selon la revendication 1 en tant que tomographe pour l'analyse et le traitement de propriétés, pouvant être acquises optiquement, d'une espèce ou d'un échantillon.
